# EUROPEAN PATENT APPLICATION

(11) **EP 2 770 515 A1**
(43) Date of publication of application: **27.08.2014**
(21) Application number: 13156579.8
(22) Date of filing: 25.02.2013
(51) Int. Cl.: H01F 38/14, H04B 5/00

(54) **A multi-directional wireless power supply device applying cambered coils for coupling to electricity**

(71) Applicant: Ceramate Technical Co., Ltd, Taoyuan County (TW)
(72) Inventor: Wang, Robert, Luch (TW)
(74) Representative: Viering, Jentschura & Partner Patent- und Rechtsanwälte

(57) **Abstract**

A multi-directional wireless power supply device applying cambered coils for coupling to electricity comprises a power base. A top surface of a case of the power base is defined as a cambered surface. An electric joint is disposed on the case and connected to a power converting unit disposed in the case. The power converting unit is further connected to a primary coil whereby the primary coil accompanying with a secondary coil of an external electric equipment can attain an electromagnetic induction to transmit the electrical energy to the external electric equipment wirelessly for using and allow the external electric equipment to be rotated in multiple directions for attaining the multi-directional wireless power supply, which also facilitates a convenient detachment and easy carrying of the external electric equipment.

## Description

### BACKGROUND OF THE INVENTION

### 1. Field of the Invention

The present invention relates to a multi-directional wireless power supply device applying cambered coils for coupling to electricity.

### 2. Description of the Related Art

The dependence on the electric equipments grows with time due to the scientific and technical advancement. Generally, the conventional electric equipment applies the wire to transmit electric power for supplying requisite electrical energy. In other words, the conventional power supply transmits electricity via a wired power supply device for supplying the requisite electrical energy to the external electric equipment.

The wired power supply device generally includes an electric joint for being electrically connected to an external power. The electric joint is electrically connected to the external electric equipment via a wire for supplying the requisite electrical energy of the external electric equipment. When the conventional electric equipment, such as lamps and screens, needs a multi-directional rotation at the time of operating, the wire may be twisted or even broken due to the rotation, with the result that the application of the external electric equipment is subject to the wire of the power supply device, so that the operating angle of the external electric equipment is limited. Hence, the inventor of the present invention realized the mentioned disadvantages and considered that the conventional power supply device could be improved, thereby presenting the present invention.

### SUMMARY OF THE INVENTION

It is an object of the present invention to provide a multi-directional wireless power supply device applying cambered coils for coupling to electricity, which allows the external electric equipments to be operated with multiple directions and keeps the device from the limitation of the rotating angles. Moreover, the multi-directional wireless power supply device applying cambered coils for coupling to electricity of the present invention can also supply requisite electrical energy for the external electric equipment wirelessly so as to attain the object of multi-directional wireless power supply.

The multi-directional wireless power supply device applying cambered coils for coupling to electricity comprises a power base which includes a case. A top surface of the case is defined as a cambered surface. An electric joint is disposed on the case for being electrically connected to an external power. A power converting unit is disposed in the case. One end of the power converting unit is electrically connected to the electric joint. The other end of the power converting unit is electrically connected to a primary coil. The primary coil is defined as a camber shape corresponding to the cambered surface of the case.

The multi-directional wireless power supply device applying cambered coils for coupling to electricity in accordance with the present invention applies the primary coil cooperating with a secondary coil disposed on an external electric equipment to transmit the electricity to the external electric equipment wirelessly by electromagnetic induction for meeting the demand. The wire connected between the external electric equipment and the electric joint can be omitted, so that the external electric equipment is actuated with a multi-directional rotation without limitation. The cambered surface is applied to connect the multi-directional wireless power supply device applying cambered coils for coupling to electricity and the external electric equipment, so that the external electric equipment can be rotated with multiple directions in the electromagnetic inducting scope of the primary coil for multi-directional wireless power supply. Furthermore, it is more convenient for conveniently detaching and easily carrying the external electric equipment.

### BRIEF DESCRIPTION OF THE DRAWINGS

- Fig. **1**: is a perspective view showing a first preferred embodiment of the present invention;
- Fig. **2**: is a section view showing the first preferred embodiment of the present invention;
- Fig. **3**: is a schematic view showing the first preferred embodiment of the present invention in use;
- Fig. **4**: is the perspective view showing the first preferred embodiment of the present invention in practice;
- Fig. **5**: is a schematic view showing the first preferred embodiment of the present invention in another practice;
- Fig. **6**: is a schematic view showing a second preferred embodiment of the present invention in use;
- Fig. **7**: is a section view showing a third preferred embodiment of the present invention;
- Fig. **8**: is a schematic view showing the third preferred embodiment of the present invention in use; and
- Fig. **9**: is a schematic view showing a fourth preferred embodiment of the present invention in use.

### DETAILED DESCRIPTION OF THE PREFERRED EMBODIMENTS

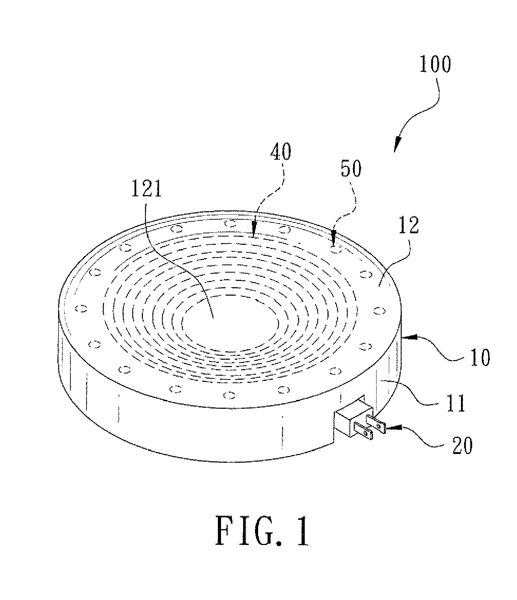

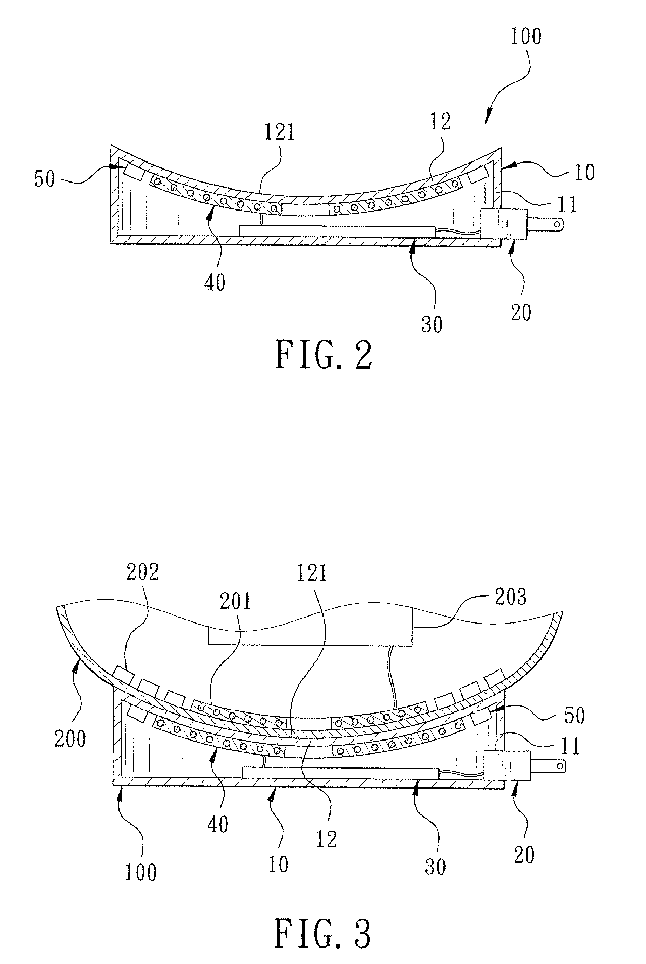

Referring to Figs. **1** and **2****,** a perspective view and a section view of a first preferred embodiment of the present invention disclose a multi-directional wireless power supply device **100** applying cambered coils for coupling to electricity. The multi-directional wireless power supply device **100** applying cambered coils for coupling to electricity comprises:
A power base **10** including a case 11. A top surface of the case **11** is defined as a cambered surface **12.** The case **11** can be completely sealed after assemble the elements. Herein, the top surface of the case **11** is defined as a concave cambered surface **121.**
An electric joint **20** disposed on the case **11** for being electrically connected to an external power. Herein, the electric joint **20** is defined as a plug.

A power converting unit **30** disposed in the case **11.** One end of the power converting unit **30** is electrically connected to the electric joint **20.**

A primary coil **40** disposed in the case **11.** Herein, the primary coil **40** is disposed on an inner wall of the top surface of the case **11** and defined as a camber shape corresponding to the cambered surface of the case **11.** The primary coil **40** is electrically connected to the other end of the power converting unit **30.**

A plurality of magnets **50** annularly disposed at an external peripheral of the primary coil **40** on the inner wall of the top surface of the case **11.**

Referring to Fig. **3****,** a schematic view of the first preferred embodiment of the present invention in use is shown. An external electric equipment **200** is disposed on the concave cambered surface **121,** namely a convex cambered surface of the external electric equipment **200** is disposed corresponding to the concave cambered surface of the case **11** to attain a limiting effect. Therefore, the external electric equipment **200** is actuated on the concave cambered surface **121** with the multi-directional rotation. A secondary coil **201** is disposed in the external electric equipment **200.** A scope of the secondary coil **201** is smaller than the primary coil **40** so that the secondary coil **201** is completely disposed corresponding to the primary coil **40** while the external electric equipment **200** is operated in a multi-directional rotation. The multi-directional wireless power supply device **100** applying cambered coils for coupling to electricity is electrically connected to the external power via the electric joint **20** for supplying the requisite electrical energy, which is converted into one conformable to a power standard of the external electric equipment **200** via the power converting unit **30** and then supplied to the primary coil **40.** The primary coil **40** is applied to convert the electrical energy into a magnetic force. The secondary coil **201** disposed in the external electric equipment **200** generates the electrical energy by the electromagnetic induction and supplies the electrical energy to the external electric equipment **200** for using. The wire connected between the external electric equipment **200** and the electric joint **20** can be omitted, so that the external electric equipment **200** is rotated with multiple directions without limitation. Moreover, the cambered surface **12** is applied to connect the multi-directional wireless power supply device **100** applying cambered coils for coupling to electricity and the external electric equipment **200,** so that the external electric equipment **200** is rotated with multiple directions in the scope of the electromagnetic induction of the primary coil **40** for attaining multi-directional wireless power supply.

In addition, a rechargeable battery **203** is preferably built in the external electric equipment **200.** When the external electric equipment **200** is connected to the multi-directional wireless power supply device **100** applying cambered coils for coupling to electricity, the multi-directional wireless power supply device **100** applying cambered coils for coupling to electricity can not only supply power to the external electric equipment **200** but also charge the chargeable battery **203.** When the multi-directional wireless power supply device **100** applying cambered coils for coupling to electricity does not supply electricity to the external electric equipment **200,** the external electric equipment **200** still can be actuated by the electrical energy supplied by the chargeable battery **203.** The multi-directional wireless power supply device **100** applying cambered coils for coupling to electricity can be detachably connected to the external electric equipment **200** for allowing the external electric equipment **200** to be carried easily and used portably.

Referring to Fig. **3****,** the magnets **50** are preferably and annularly disposed on the inner wall of the top surface of the case **11** and cooperates with a plurality of magnets **202** which is annularly disposed in the external electric equipment **200,** whereby the combination between the external electric equipment **200** and the concave cambered surface **121** is much stable. It is an embodiment that the magnets **202** can cooperate with the multi-directional rotation of the external electric equipment **200** by attracting the magnets **50** with each other via different angles. The magnets **202** disposed in the external electric equipment **200** can also be metals which are applied to attract the magnets. Furthermore, the connection of the multi-directional wireless power supply device **100** applying cambered coils for coupling to electricity can be detachably connected to the external electric equipment **200.** Therefore, the external electric equipment **200** can be speedily detached in emergency and supply power by the chargeable battery **203** which is built in the external electric equipment **200** for carrying.

Because of the detachable connection, the external electric equipment **200** is conveniently replaced, and the interchangeability thereof is also enhanced, which provides the user having more choices of the external electric equipments.

Moreover, the case **11** can be completely sealed after assembling the elements to apply the electromagnetic induction proceeding the wireless transmission without exposing the structure connected to the external electric equipment **200.** It is no worry about the power leakage and the fully-sealed structure attains to the object of waterproofing.

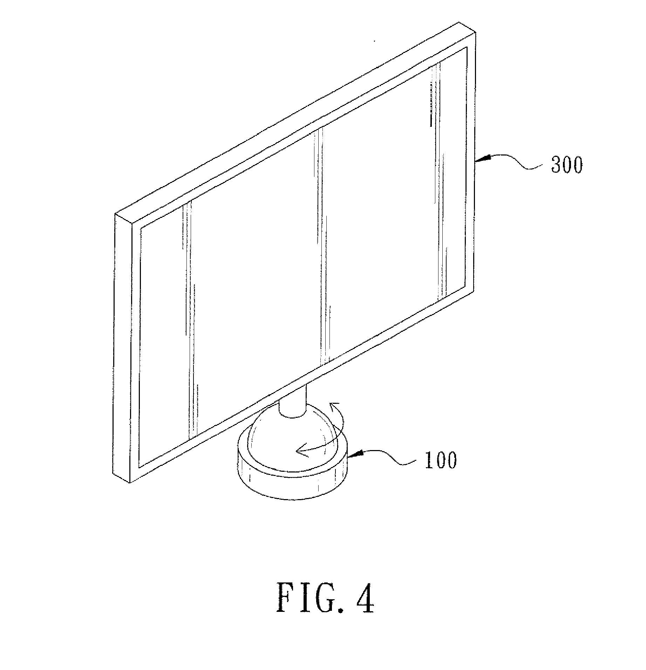

Referring to Fig. **4** showing a schematic view of the first preferred embodiment of the present invention in practice and Fig. **3****,** the multi-directional wireless power supply device **100** applying cambered coils for coupling to electricity preferably includes a screen **300** disposed on the concave cambered surface **121.** Therefore, the screen **300** can be actuated with a multi-directional rotation on the concave cambered surface **121** without limitation, and no wires are twisted or broken because of the rotation so as to allow the screen to be used in multiple directions.

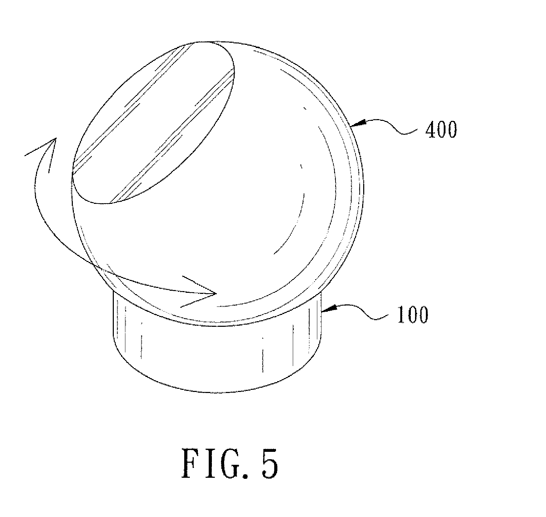

Referring to Fig. **5**, a schematic view of the first preferred embodiment of the present invention in another practice and Fig. **3****,** the multi-directional wireless power supply device **100** applying cambered coils for coupling to electricity preferably includes a lamp **400** disposed on the concave cambered surface **121.** Therefore, the lamp **400** can be actuated with a multi-directional rotation on the concave cambered surface **121** without limitation, and no wires are twisted or broken because of the rotation for the lamp **400** to be used in multiple directions of lighting. Further, the chargeable battery is disposed in the lamp **400,** which is convenient to be removed for carrying or for particular actions, such as taking off the lamp **400** for lighting in short distance, and lighting for searching things. Furthermore, it can also be speedily removed for a portable lighting in an emergency, such as a power failure.

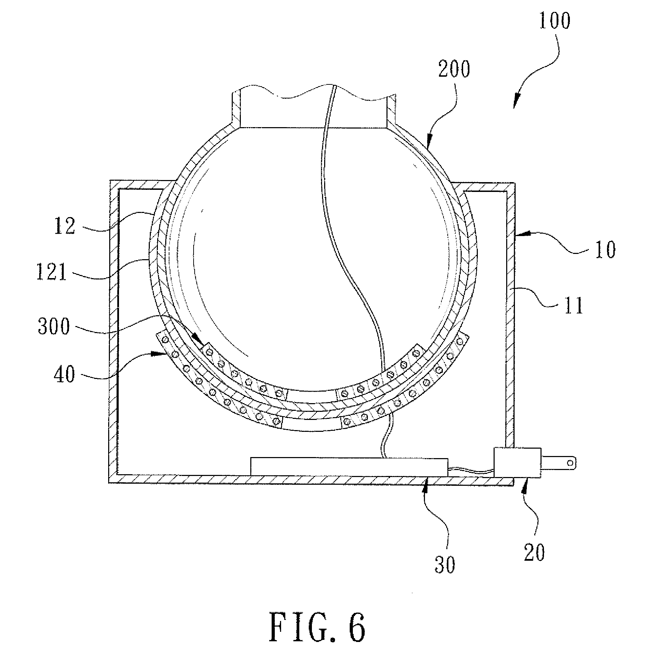

Referring to Fig. **6****,** a schematic view of a second preferred embodiment of the present invention is shown. The difference between the multi-directional wireless power supply device applying cambered coils for coupling to electricity of the second preferred embodiment and the first preferred embodiment is that the concave cambered surface **121** covers the external electric equipment **200** with a convex cambered surface for limiting, which allows stabilizing the combination thereof without the arrangement of magnets and allows the external electric equipment **200** to be actuated with a multi-directional rotation.

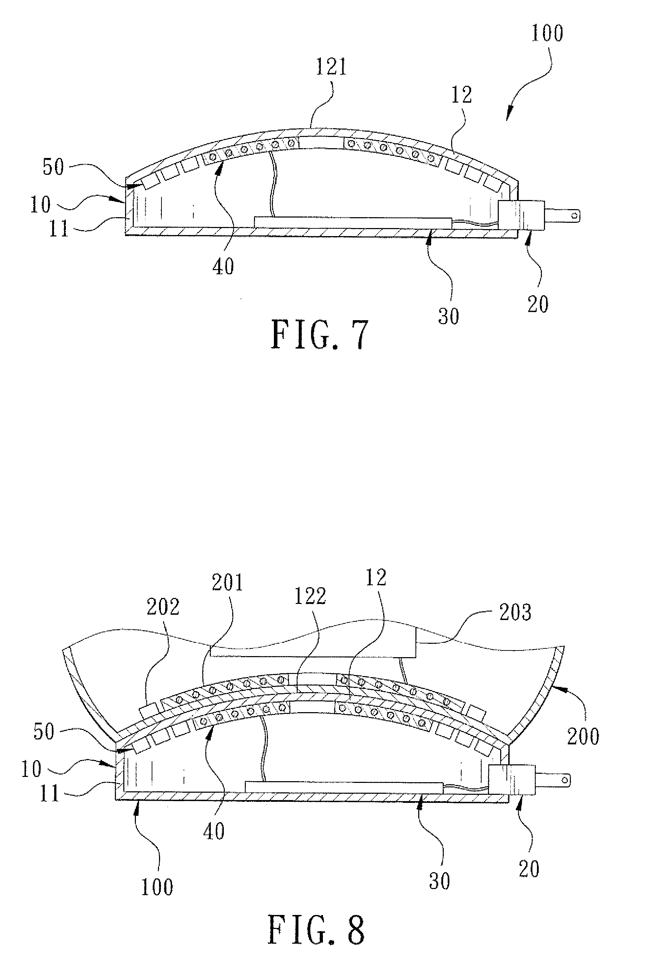

Referring to Figs. **7** and **8****,** a sectional view of a third preferred embodiment of the present invention and a schematic view of the third preferred embodiment of the present invention in use are shown. The difference between the multi-directional wireless power supply device applying cambered coils for coupling to electricity of the third preferred embodiment and the first preferred embodiment is that the top surface of the case **11** is defined as a convex cambered surface **122.** In the third preferred embodiment, the external electric equipment **200** with concave cambered surface is disposed on the convex cambered surface **122** so as to be limited, which allows stabilizing the combination thereof by a plurality of magnets **202** which are annularly disposed in the external electric equipment **200** and allows the convex cambered surface **122** to be actuated on the external electric equipment **200** with a multi-directional rotation. A secondary coil **201** is preferably disposed in the external electric equipment **200** for executing the transmission of electrical energy via the electromagnetic induction. A scope of the secondary coil **201** is larger than the primary coil **40,** so that the secondary coil **201** is corresponding to the primary coil **40** in the multi-directional rotating procedure of the external electric equipment **200.**

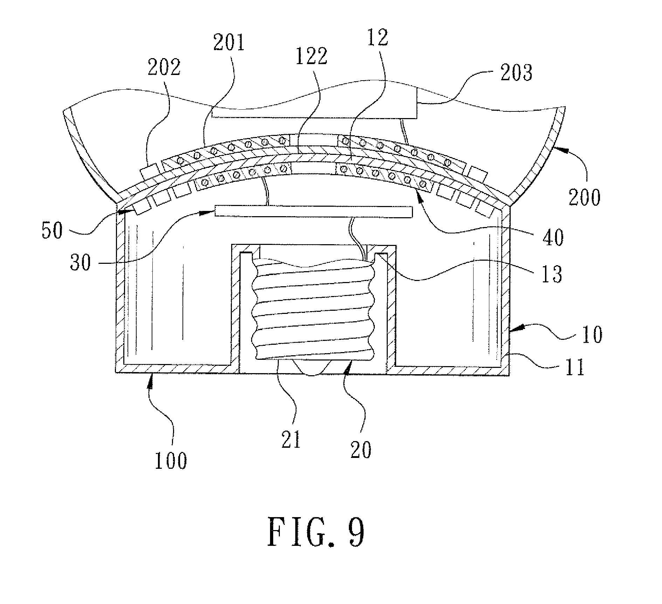

Referring to Fig. **9****,** a schematic view of a fourth preferred embodiment of the present invention in use is shown. The difference between the multi-directional wireless power supply device applying cambered coils for coupling to electricity of the fourth preferred embodiment and the third preferred embodiment is that the electric joint **20** is defined as a screwed joint **21.** A groove **13** is concavely disposed at the bottom side of the power base **10.** The screwed joint **21** is embedded in the groove **13** for being screwed with a screwed joint base used for general bulbs so as to supply a market power, allowing the external electric equipment **200** which is combined with the multi-directional wireless power supply device **100** applying cambered coils for coupling to electricity to be actuated with a multi-directional rotation. The present device can be detachably connected to the external electric equipment 200 so that the external electric equipment **200** can be removed or installed without screwing so as to conveniently detach and replace the external electric equipment **200.** Furthermore, the connection between the multi-directional wireless power supply device **100** applying cambered coils for coupling to electricity and the external electric equipment **200** is a electrically-connecting structure without exposing, so there is no worry about the power leakage, which is safer for removing and replacing the external electric equipment **200.**

## Claims

1. A multi-directional wireless power supply device applying cambered coils for coupling to electricity comprising:
a power base including a case; a top surface of said case defined as a cambered surface;
an electric joint disposed on said case for being electrically connected to an external power;
a power converting unit disposed in said case; one end of said power converting unit being electrically connected to said electric joint; and
a primary coil disposed in said case and formed into a camber shape corresponding to said cambered surface of said case; said primary coil being electrically connected to the other end of said power converting unit.

2. The multi-directional wireless power supply device applying cambered coils for coupling to electricity as claimed in claim 1, wherein said top surface of said case is defined as a concave cambered surface.

3. The multi-directional wireless power supply device applying cambered coils for coupling to electricity as claimed in claim 1, wherein said top surface of said case is defined as a convex cambered surface.

4. The multi-directional wireless power supply device applying cambered coils for coupling to electricity as claimed in claim 1, wherein said electric joint is defined as a plug.

5. The multi-directional wireless power supply device applying cambered coils for coupling to electricity as claimed in claim 1, wherein said electric joint is defined as a screwed joint; a groove is concavely disposed on a bottom side of said power base; said screwed joint is embedded in said groove for being screwed with a screwed joint base used for general bulbs so as to supply a market power.

6. The multi-directional wireless power supply device applying cambered coils for coupling to electricity as claimed in claim **1**, wherein a plurality of magnets are annularly disposed at an external peripheral of said primary coil on an inner wall of said top surface of said case.
